# EUROPEAN PATENT SPECIFICATION

(11) **EP 1 877 345 B1**
(45) Date of publication and mention of the grant of the patent: **02.05.2012**
(21) Application number: 05762747.3
(22) Date of filing: 08.04.2005
(51) Int. Cl.: C02F 9/02, C02F 9/04, C02F 11/12, B01D 29/11, C02F 1/00, C02F 1/72

(54) **WASTE WATER COMPACT DISINFECTION PLANT FOR HOSPITAL WARD**
KOMPAKTE ABWASSERDESINFEKTIONSANLAGE FÜR KRANKENSTATION
INSTALLATION COMPACTE DE DESINFECTION D EAUX USEES POUR SALLE D HOPITAL

(43) Date of publication of application: 16.01.2008
(73) Proprietor: Tecno Service First S.r.l., 47891 Serravalle (SM)
(72) Inventor: COLLA, Lucio, Bresso (IT)
(74) Representative: Provvisionato, Paolo
(86) International application number: PCT/SM2005/000001
(87) International publication number: WO 2006/107285

(56) References cited:
- US-A- 3 864 258
- US-A- 3 883 432
- US-A- 6 126 830

## Description

### Technical Field

The present invention relates to a waste water compact disinfection plant for hospital wards. It is particularly useful in those cases in which there is a greater risk of picking up diseases deriving from contact with substances containing harmful micro-organisms which may be dispersed in such waters, as happens for example in hospital wards for contagious diseases; and for those small hospital structures which, being outside urban centres, cannot connect to sewer systems for the collection and treatment of waste water.

### Background Art

In general, the problem of hospital waste water is undervalued, since it is widely believed that this waste water is similar to domestic waste water.
Moreover, the vagueness of legislation on the matter does not provide certain evaluation elements which indicate how to plan prevention and sanitising work.
It may be seen that in many situations there is a complete absence of a plant for the treatment of polluted waste or even any system for its pre-treatment and disinfection. In this way, there is a risk of infection and epidemics firstly for the entire hospital environment and secondly for the external environment and population.
Although every hospital structure is a special case which requires specific considerations in order to define the most appropriate course of action, experience shows that the quantity of water consumed in medium-sized hospitals is around 500 litres a day per bed and that effective consumption depends on the presence and characteristics of general services, such as kitchens, laundry, heating and air conditioning plant. Internal drainage systems carry all waste water produced to a single point where it flows into the sewer main without any collection or treatment operations along the path. Drainage system maintenance is assigned to persons from inside or outside the hospital who often face significant problems due to the fact that the systems are designed and built for much smaller loads or loads at least different to the actual ones.
In practice, waste water should be subjected to a controlled disinfection treatment preceded by mechanical pre-treatment. US 3 883 432 and US 3 864 258 disclose that the solids delivered with the effluent are finely disintegrated and macerated. US 3 864 258 in particular, discloses an apparatus comprising a sieve to prevent the passage of larger solids, cleaning means and a thermal distructor for crushing the wet solids.
Indeed, very often, hospital drain lines become blocked due to the substantial incalculability of the quantity and type of coarse materials put down the drains.
This necessitates purging and cleaning and it is increasingly difficult to find personnel willing to perform these duties, partly due to the objective risk of picking up diseases and infections.
If normal waste water contains coarse suspended solids, it should be considered that this contest notably increases in the case of hospital waste, in which, in addition to organic waste, there is gauze, paper, plastic, rubber, needles and syringes. Obviously, without suitable separation, sending these materials into disinfection tanks inevitably produces blockages. However, unfortunately the direct screening separation systems traditionally used have the major disadvantage of requiring frequent action by personnel to remove the materials collected, with a consequent risk of infection.
In disinfection treatment, some of the chemical products most often used are sodium hypochlorite and glutaraldehyde. Although these are effective, it is important to consider that in these situations they must be used in very high doses.
Moreover, the variability of the characteristics of the waste water treated makes the use of automatic dose checking and adjusting instruments difficult, so situations may arise in which overdosing causes excessive, and therefore polluting, quantities of disinfectant to get into the sewers.
Sodium hypochlorite is not recommended, since it may lead to the creation of persistent organo-chlorinated compounds in aquatic environments, particularly harmful for flora and fauna. Glutaraldehyde, used for disinfecting and cleaning surgical instruments before sterilisation, is too expensive to be consumed in such large quantities.
In general, the need for a strong oxidiser which supplies the chlorine ion and the oxygen ion without the formation of unwanted compounds may be satisfied using 120 volume hydrogen peroxide or ozone.
However, ozone production requires complex plants and must be done at the time the ozone is necessary, due to the speed with which it decomposes; whilst hydrogen peroxide needs very acidic environments (pH lower than 3) and high temperatures (above 60°C) to work correctly.

### Disclosure of the Invention

The aim of the present invention is, therefore, to overcome the above-mentioned disadvantages. This is achieved thanks to a waste water compact disinfection plant for hospital wards according to claim 1.

The main advantage of the present invention is basically the fact that by avoiding the need for continuous surveillance by personnel it can operate with maximum safety and protection for personnel and the environment.
Moreover, prefabrication in a workshop allows plant installation with just a few simple adjustments of the existing constructions.

### Brief Description of the Drawings

Further features and the advantages of the present invention are more clearly illustrated in the detailed description which follows, with reference to the accompanying drawings, which illustrate a preferred embodiment without limiting the scope of the inventive concept, in which:
Figure 1 is an assembly view of the invention, with some parts cut away to better illustrate others;
Figure 2 is an operating diagram of the invention;
Figures 3 and 4 illustrate details of the invention.

### Detailed Description of the Preferred Embodiments of the Invention

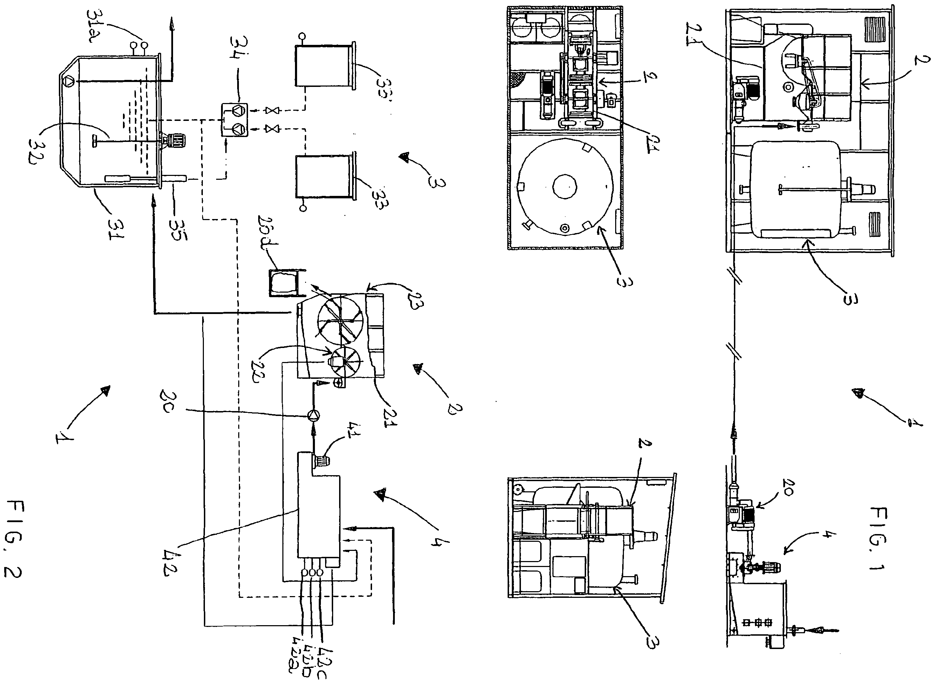

With reference to the accompanying drawings, the invention relates to a waste water compact disinfection plant for hospital wards, according to claim 1. In Figures 1 and 2 the path of the waste water is indicated by the thickest arrow.

Although each of the stations may be made independently according to the criteria below, and therefore improved separately, without the other station having the features indicated, it is obvious that, to gain the maximum advantage, the plant (1) disclosed should simultaneously have the mechanical treatment station (2) comprising an apparatus (21) for separating and dehydrating the solids present in the waste water and the chemical disinfection station (3) comprising a disinfection tank (31), having a mixer (32), and at least one disinfectant feed reservoir (33), in addition to means (34) for delivering the disinfectant, located between the reservoir (33) and the disinfection tank (31).

Depending on the size of the hospital, its location and the existing structures, the plant (1) may also have a mechanical pre-treatment station (4), which in Figure 1 is illustrated physically separate from the rest of the plant (1). Inside the mechanical pre-treatment station the solid materials present in the waste water are ground while wet. The mechanical pre-treatment station (4) comprises a macerator (41), designed to break up the solid waste, which operates inside a collection tank (42) for the so-called unrefined water arriving from the various hospital wards.

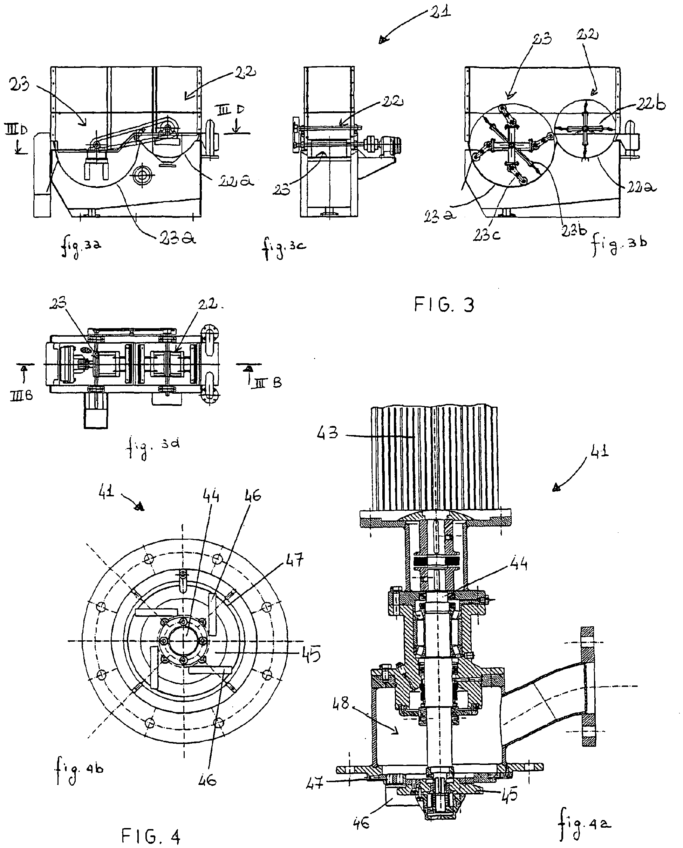

In a preferred embodiment, illustrated in Figure 4, the macerator (41), shown in two sections, respectively a longitudinal section (Figure 4a) and a cross-section (Figure 4b), comprises a motor (43), to which a rotary drive shaft (44) is connected. On the rotary drive shaft (44) a rotary head (45) is keyed which supports a plurality of blades (46), below which there is a fixed plate (47) with holes made in it, the edges of the holes being cutting edges.

The plate (47) is housed in a seat made in the lower part of an intake chamber (48), from which the waste water is expelled towards the subsequent treatment stations.

When the macerator (41) is operating, rotation of the head (45) and the blades (46) creates a turbulence which brings any solids that may have been deposited into suspension again. Solids which can be worked on, such as rags and plastic, are cut on contact with the blades (46) and broken up as they pass through the holes in the plate (47); heavier, denser solids such as stones, glass and metals, are moved away by centrifugal force and must be periodically removed.

When the blades are worn, the entire head (45) is removed and substituted with another bearing new blades (46). The worn blades (46) are substituted in the workshop and the head (45) is ready for use again. In contrast, the plates (47) are made in such a way that successive grindings of the cutting surface greatly extends their life, with an obvious economic advantage.

The apparatus (21) for separating and dehydrating the solids illustrated in Figure 3 according to a side view (Figure 3a) and a front view (Figure 3c) and according to cross-sections IIIB-IIIB (Figure 3b) and IIID-IIID (Figure 3d), receives the waste water from the macerator (41). The apparatus comprises at least two stages of treatment (22, 23), in series.

The first stage of treatment (22) comprises a first sieve (22a), designed to prevent the passage of solids with dimensions greater than a predetermined value, and means (22b) for cleaning the surface of the sieve (22a). By way of example and without limiting the scope of the present invention, recommended values for the diameter of the holes in the sieve (22a), and therefore of the dimensions of the solids caught in the sieve, are between 1 and 2 millimetres.

The second stage of treatment (23) comprises a second sieve (23a), with holes having a diameter of approximately 3 millimetres, also designed to prevent the passage of solids with dimensions greater than a predetermined value, means (23b) for cleaning the surface of the sieve (23a) and means (23c) for crushing the solid waste remaining in the sieve (23a), designed to promote its dehydration. This second stage of treatment (23) also comprises means (23d) for collecting the dehydrated solid waste.

In the embodiments illustrated in the drawings, the cleaning means (22b, 23b) comprise rotary brushes which brush the bottom of the corresponding sieve (22a, 23a); whilst the means (23c) for crushing the solid waste comprise rotary rollers.

The waste remaining in the first sieve (22a) is pushed by the brushes (22b) towards the second stage (23), in which it is dehydrated and crushed by the rollers (23c), so that it becomes compact, then unloaded into the collection means (23d). In a procedure of this type, the only action taken by personnel is the periodic substitution of the collection means (23d), which must then be sent for special waste disposal.

After these mechanical treatments, the waste water is carried to the disinfection tank (31), where a mixer (32) mixes it with the disinfectant taken from one or more reservoirs (33) and transferred by the delivery means (34), consisting of positive-displacement pumps.

The recommended disinfectant is present as a peracetic acid solution in the reservoirs (33) and is dosed by the delivery means (34). Use of this acid means that the quality of the water at the sewer can be guaranteed by simply checking, with continuous measurements, the pH of the water which comes out and the dosing of small quantities of caustic soda.

A system of this kind may be installed in a hospital already operating, simply requiring a supporting base with a capacity of around 1000 kilograms per square metre and preparing the connections to the electrical power line, to the mains water supply and to the existing drain for supply and discharge.

Its automatic operation is guaranteed by a set of suitably positioned sensors (42a, 42b, 42c, 31a). For example, Figure 2 shows level sensors (42a, 42b, 42c) in the waste water collection tank (42), controlling plant (1) start up and a measuring sensor (31a), in the disinfection tank (31), checking the quantity of disinfectant present in the water treated before returning it to the drains. Operation of the latter is linked to operation of a measuring device (35) which regulates the dose of disinfectant delivered by the positive-displacement pumps (34).

The low level sensor (42a) protects the macerator (41) from the risk of operating when dry, the mid-level sensor (42b) checks operation of a pump (20) which transfers the water from the mechanical pre-treatment station (4) to the mechanical treatment station (2), whilst the high level sensor (42c) checks macerator (41) operation.

## Claims

1. A waste water compact disinfection plant for hospital wards comprising, in combination, a mechanical treatment station (2) and a chemical disinfection station (3), wherein the mechanical treatment station (2) comprises an apparatus (21) for separating and dehydrating the solids present in the waste water consisting of at least two stages of treatment (22, 23), the first stage of treatment (22) comprising a first sieve (22a), designed to prevent the passage of solids with dimensions greater than a predetermined value, and means (22b) for cleaning the surface of the sieve (22a) and the second stage of treatment (23) of apparatus (21) comprising a second sieve (23a), designed to prevent the passage of solids with dimensions greater than a predetermined value, means (23b) for cleaning the surface of the sieve (23a) and means (23c) for crushing the solid waste remaining in the sieve (23a), so as to promote dehydration of said solid waste, said plant being **characterised in that** the cleaning means (22b, 23b) comprise rotary brushes which brush the bottom of the corresponding sieve (22a, 23a) and the means (23c) for crushing the solid waste comprise rotary rollers, the two stages (22, 23) of mechanical treatment being suitable for pushing the waste remaining in the first sieve (22a) by the cleaning means (22b) towards the second stage (23), in which it is dehydrated and crushed by the crushing means (23c).

2. The plant according to claim 1, **characterised in that** the mechanical treatment station (2) comprises an apparatus (21) for separating and dehydrating solids present in the waste water and the chemical disinfection station (3) comprises a disinfection tank (31), with a mixer (32) and at least one disinfectant feed reservoir (33), and also comprises means (34) for delivering the disinfectant locate between the reservoir (33) and the disinfection tank (31).

3. The plant according to claim 1 or 2, **characterised in that** comprises a mechanical pre-treatment station (4), in which the solid materials present in the waste water are ground while wet.

4. The plant according to claim 1 or 3, **characterised in that** the chemical disinfection station (3) comprises a disinfection tank (31), with a mixer (32) and at least one disinfectant feed reservoir (33), and also comprises means (34) for delivering the disinfectant located between the reservoir (33) and the disinfection tank (31).

5. The plant according to claim 3 or 4, **characterised in that** the mechanical pre-treatment station (4) comprises a macerator (41), designed to break up the solid waste.

6. The plant according to claim 1, **characterised in that** the second stage of treatment (23) comprises means (23d) for collection of the dehydrated solid waste.

7. The plant according to claim 5, **characterised in that** the macerator (41) comprises a motor (43), a rotary drive shaft (44), driven by the motor (43), a rotary (45) head, integral with the motor (43), a plurality of blades (46), supported by the rotary head (45), and a fixed plate (47) with holes made in it, the edges of the holes being cutting edges, located between the blades (46) and an intake chamber (48), so that the solid waste is broken up by the blades (46) and the holes in the plate (47) before reaching the intake chamber (48).

8. The plant according to claim 1 or 2 or 3 or 4 or 5, **characterised in that** it comprises a plurality of sensors (42a, 42b, 42c, 31a) designed to allow automatic operation of the entire plant (1).

9. The plant according to claim 8, **characterised in that** the sensors (42a, 42b, 42c, 31a) comprise level sensors (42a, 42b, 42c) located in a waste water collection tank (42) in the mechanical pre-treatment station (4).

10. The plant according to claim 8, **characterised in that** the sensors (42a, 42b, 42c, 31a) comprise a measuring sensor (31a), located in the disinfection tank (31) and designed to check the quantity of disinfectant present in the water at the plant (1) outlet.

11. The plant according to claim 2 or 4, **characterised in that** it comprises a measuring device (35) designed to regulate the dose of disinfectant delivered by the delivery means (34).

## Patentansprüche

1. Eine kompakte Desinfektionsanlage für Abwässer von Krankenhausstationen, die, miteinander kombiniert, eine Station zur mechanischen Aufbereitung (2) und eine chemische Desinfektionsstation (3) umfasst, wobei die mechanische Aufbereitungsstation (2) Folgendes umfasst: einen Apparat (21) zur Trennung und Trocknung der Festkörper, die sich in dem Abwasser befinden, der aus mindestens zwei Aufbereitungsstadien (22, 23) besteht, wobei das erste Aufbereitungsstadium (22) ein erstes Sieb (22a) beinhaltet, das dazu vorgesehen ist, den Durchgang von Festkörpern zu verhindern, die größer als ein festgelegter Wert sind, und Mittel (22b) zur Reinigung der Oberfläche des Siebs (22a), und das zweite Aufbereitungsstadium (23) des Apparats (21) ein zweites Sieb (23a) umfasst, das dazu vorgesehen ist, den Durchgang von Festkörpern zu verhindern, die größer als ein festgelegter Wert sind, Mittel (23b) zur Reinigung der Oberfläche des Siebs (23a) und Mittel (23c) zum Zerdrücken der Festabfälle, die im Sieb (23a) verbleiben, um die Trocknung besagter Festabfälle zu fördern; besagte Anlage ist **dadurch gekennzeichnet, dass** die Reinigungsmittel (22b, 23b) rotierende Bürsten umfassen, welche den Boden des jeweiligen Siebs (22a, 23a) abbürsten, und die Mittel (23c) zum Zerdrücken der Festabfälle rotierende Rollen umfassen; die beiden Stadien (22, 23) der mechanischen Aufbereitung eignen sich dazu, den Abfall, der im ersten Sieb (22a) verbleibt, durch die Reinigungsmittel (22b) zum zweiten Stadium (23) zu drücken, in dem er getrocknet und von den Zerdrückmitteln (23c) zerdrückt wird.

2. Die Anlage nach Patentanspruch 1, **gekennzeichnet dadurch, dass** die Station der mechanischen Aufbereitung (2) einen Apparat (21) zur Trennung und Trocknung von Festkörpern umfasst, die sich im Abwasser befinden, und dass die Station zur chemischen Desinfektion (3) einen Desinfektionsbehälter (31) mit einem Rührwerk (32) und mindestens ein Zufuhrbecken für Desinfektionsmittel (33) umfasst, und außerdem Mittel (34) zur Zufuhr des Desinfektionsmittels beinhaltet, die sich zwischen dem Becken (33) und dem Desinfektionsbehälter (31) befinden.

3. Die Anlage nach den Patentansprüchen 1 oder 2, **gekennzeichnet dadurch, dass** sie eine Station zur mechanischen Vorbehandlung (4) umfasst, in der die festen Materialien, die sich im Abwasser befinden, im nassen Zustand zermahlen werden.

4. Die Anlage nach den Patentansprüchen 1 oder 3, **gekennzeichnet dadurch, dass** die Station zur chemischen Desinfektion (3) einen Desinfektionsbehälter (31) mit einem Rührwerk (32) und mindestens einem Becken zur Zufuhr von Desinfektionsmittel (33) umfasst und außerdem Mittel (34) zur Zufuhr des Desinfektionsmittels beinhaltet, die sich zwischen dem Becken (33) und dem Desinfektionsbehälter (31) befinden.

5. Die Anlage nach den Patentansprüchen 3 oder 4, **gekennzeichnet dadurch, dass** die Station zur mechanischen Vorbehandlung (4) ein Schneidwerk (41) beinhaltet, das dazu vorgesehen ist, die Festabfälle zu zerkleinern.

6. Die Anlage nach Patentanspruch 1, **gekennzeichnet dadurch, dass** das zweite Aufbereitungsstadium (23) Mittel (23d) zum Auffangen des getrockneten Festabfalls beinhaltet.

7. Die Anlage nach Patentanspruch 5, **gekennzeichnet dadurch, dass** das Schneidwerk (41) Folgendes umfasst: einen Motor (43), eine rotierende Antriebswelle (44), die vom Motor (43) angetrieben wird, einen Drehkopf (45), der fest mit dem Motor (43) verbunden ist, eine Mehrzahl von Klingen (46), die vom Drehkopf (45) gehalten werden, und eine feststehende Platte (47) mit Löchern darin, wobei die Kanten der Löcher Schnittkanten sind, sie befindet sich zwischen den Klingen (46) und einer Einlaufkammer (48), so dass die Festabfälle von den Klingen (46) und den Löchern in der Platte (47) zerkleinert werden, bevor sie die Einlaufkammer (48) erreichen.

8. Die Anlage nach den Patentansprüchen 1 oder 2 oder 3 oder 4 oder 5, **gekennzeichnet dadurch, dass** sie eine Mehrzahl von Sensoren (12a, 42b, 42c, 31a) beinhaltet, die dazu vorgesehen sind, den automatischen Betrieb der gesamten Anlage (1) zu ermöglichen.

9. Die Anlage nach Patentanspruch 8, **gekennzeichnet dadurch, dass** die Sensoren (42a, 42b, 42c, 31a) Pegelsensoren (42a, 42b, 42c) umfassen, die sich in einem Abwasser-Auffangbehälter (42) in der Station zur mechanischen Vorbehandlung (4) befinden.

10. Die Anlage nach Patentanspruch 8, **gekennzeichnet dadurch, dass** die Sensoren (42a, 42b, 42c, 31a) einen Messsensor (31a) umfassen, der sich im Desinfektionsbehälter (31) befindet und dazu vorgesehen ist, die Menge an Desinfektionsmittel zu überprüfen, die am Auslauf aus der Anlage (1) im Wasser vorhanden ist.

11. Die Anlage nach den Patentansprüchen 2 oder 4, **gekennzeichnet dadurch, dass** sie eine Messvorrichtung (35) beinhaltet, die dazu vorgesehen ist, die Dosis des Desinfektionsmittels, das von den Zufuhrmitteln (34) zugeführt wird, zu regeln.

## Revendications

1. Une installation compacte de désinfection des eaux usées pour salles d'hôpital comprenant, en association, une station de traitement mécanique (2) et une station de désinfection chimique (3), où la station de traitement mécanique (2) comprend un appareil (21) pour la séparation et la déshydratation des solides présents dans les eaux usées consistant au moins en deux étages de traitement (22, 23), le premier étage de traitement (22) comprenant un premier tamis (22a), destiné à empêcher le passage de solides ayant des dimensions supérieures à une valeur prédéfinie, et des moyens (22b) servant à nettoyer la surface du tamis (22a), et le deuxième étage de traitement (23) de l'appareil (21) comprenant un deuxième tamis (23a), destiné à empêcher le passage de solides ayant des dimensions supérieures à une valeur prédéfinie, des moyens (23b) servant à nettoyer la surface du tamis (23a) et des moyens (23c) servant à écraser les résidus solides restant dans le tamis (23a), de manière à favoriser la déshydratation desdits résidus solides, ladite installation étant **caractérisée en ce que** les moyens de nettoyage (22b, 23b) comprennent des brosses rotatives qui brossent le fond du tamis (22a, 23a) correspondant et les moyens (23c) d'écrasement des résidus solides comprennent des rouleaux rotatifs, les deux étages (22, 23) de traitement mécanique étant adaptés pour pousser, par le biais des moyens de nettoyage (22b), les résidus restant dans le premier tamis (22a) vers le deuxième étage (23), dans lequel ils sont déshydratés et écrasés par les moyens d'écrasement (23c).

2. L'installation selon la revendication 1, **caractérisée en ce que** la station de traitement mécanique (2) comprend un appareil (21) pour la séparation et la déshydratation des solides présents dans les eaux usées et la station de désinfection chimique (3) comprend un réservoir de désinfection (31), avec un mélangeur (32) et au moins un réservoir (33) d'alimentation de désinfectant, et comprend aussi des moyens (34) pour la distribution du désinfectant situés entre le réservoir (33) et le réservoir de désinfection (31).

3. L'installation selon la revendication 1 ou 2, **caractérisée en ce qu'**elle comprend une station de prétraitement mécanique (4), dans laquelle les matériaux solides présents dans les eaux usées sont broyés alors qu'ils sont humides.

4. L'installation selon la revendication 1 ou 3, **caractérisée en ce que** la station de désinfection chimique (3) comprend un réservoir de désinfection (31), avec un mélangeur (32) et au moins un réservoir (33) d'alimentation de désinfectant, et comprend aussi des moyens (34) pour la distribution du désinfectant situés entre le réservoir (33) et le réservoir de désinfection (31).

5. L'installation selon la revendication 3 ou 4, **caractérisée en ce que** la station de prétraitement mécanique (4) comprend un broyeur (41), destiné à broyer les résidus solides.

6. L'installation selon la revendication 1, **caractérisée en ce que** le deuxième étage de traitement (23) comprend des moyens (23d) de collecte des résidus solides déshydratés.

7. L'installation selon la revendication 5, **caractérisée en ce que** le broyeur (41) comprend un moteur (43), un arbre d'entraînement rotatif (44), mené par le moteur (43), une tête rotative (45), solidaire du moteur (43), une pluralité de lames (46), supportées par la tête rotative (45), et un plateau fixe (47) présentant des trous, les arêtes des trous étant des arêtes tranchantes, situé entre les lames (46) et une chambre d'admission (48), de sorte que les résidus solides sont broyés par les lames (46) et les trous du plateau (47) avant d'atteindre la chambre d'admission (48).

8. L'installation selon la revendication 1 ou 2 ou 3 ou 4 ou 5, **caractérisée en ce qu'**elle comprend une pluralité de capteurs (12a, 42b, 42c, 31a) destinés à permettre un fonctionnement automatique de toute l'installation (1).

9. L'installation selon la revendication 8, **caractérisée en ce que** les capteurs (42a, 42b, 42c, 31a) comprennent des capteurs de niveau (42a, 42b, 42c) situés dans un réservoir (42) de collecte des eaux usées dans la station de prétraitement mécanique (4).

10. L'installation selon la revendication 8, **caractérisée en ce que** les capteurs (42a, 42b, 42c, 31a) comprennent un capteur de mesure (31a), situé dans le réservoir de désinfection (31) et destiné à contrôler la quantité de désinfectant présent dans l'eau à la sortie de l'installation (1).

11. L'installation selon la revendication 2 ou 4, **caractérisée en ce qu'**elle comprend un dispositif de mesure (35) destiné à réguler la dose de désinfectant distribué par les moyens de distribution (34).
